# EUROPEAN PATENT APPLICATION

(11) **EP 2 418 873 A1**
(43) Date of publication of application: **15.02.2012**
(21) Application number: 11183195.4
(22) Date of filing: 28.02.2002
(51) Int. Cl.: H04Q 11/00, H04N 1/00, H04N 7/18, H04N 7/10

(54) **Wireless multimedia system**

(30) Priority: 28.02.2002 US 796270
(62) Divisional of application: 02725035.6
(71) Applicant: Eiger, Tuvia, East Meadow, NY 11554 (US); Berchin, Uriel, East Meadow, NY 11554 (US)
(72) Inventor: Eiger, Tuvia, East Meadow, NY 11554 (US); Berchin, Uriel, East Meadow, NY 11554 (US)
(74) Representative: Walker, Ross Thomson

(57) **Abstract**

A customer premises installation has a wireless multimedia center (96) for reception from one or more signal sources and for distribution of segments of signals from signal sources through the wireless multimedia center (96) to a plurality of end units (78, 81, 101-103), in which the signals include video signals and broadband data. The wireless multimedia center (96) receives all the signals and distributes segments of said signals via a transmitter. The video signals are transmitted by orthogonal frequency division multiplexing in which all signals are added together and summed as an orthogonal array having dimensions of time, frequency and amplitude, to transmit spread spectrum multiplexed signals. Each pulse has sufficiently long individual pulse widths to defeat multi-path, reflection and absorption phase induced losses. The video signals are distributed to end units. The end units communicate with the wireless multimedia center (96), controlling which segments of which signals are distributed to each end unit.

## Description

### BACKGROUND OF THE INVENTION.

### FIELD OF THE INVENTION.

This invention relates to a wireless distribution system for home or business comprising a unitary distribution box, called a wireless multimedia center, which has inputs for receiving signals from one or more sources. Signals are then re-broadcast throughout the site by low energy digital transmissions, at energy levels just above background radiation. These signals are transmitted to and received by individual transceivers, called end units (EU), located throughout the site.

### BRIEF SUMMARY OF THE INVENTION.

This invention relates to a wireless distribution system for home or business comprising a unitary distribution box, called a wireless multimedia center (WMC), which has inputs for receiving signals from one or more of: a satellite dish; a terrestrial antenna such as a VHF/UHF; a cable line; a telephone or data line such as ISDN, DSL, etc.; and/or fiber optic line, and any other future data or program sources can also be transparently input to the WMC with appropriate modifications or modular plug-ins.

Signals input are then re-broadcast throughout the premises by low energy digital transmissions, at energy levels just above background radiation. These signals are transmitted to and received by individual transceivers, called end units (EU), located throughout the premises. These EU transceivers are presently contemplated as a video end unit (VEU) for TV and radio, and a communications end unit (CEU), for telephone and data.

The data channel instructs the WMC which program and data signals to send to which EU. Special multiplexing techniques result in extraordinary bandwidth and channel capacity.

### BRIEF DESCRIPTION OF THE SEVERAL VIEWS OF THE DRAWING.

Fig. 1 is a block diagram of a unified multimedia distribution system of the present invention
Fig. 2 is a a similar block diagram for analog services.
Fig. 3 is an elevation of a connector mounting surface of an end unit of the present invention.
Fig. 4 is a block diagram of a unified multimedia distribution system of the present invention showing digital services.
Fig. 5 is representational block diagram of the invention in a home environment.
Fig. 6 is a representational block diagram of the invention in a commercial environment.
Fig. 7 is representational block diagram of the invention as an alarm and remote monitor.
Fig. 8 is a similar diagram of the invention controlling appliances.
Fig. 9 is representational block diagram of the invention as used to depict odors.

### DETAILED DESCRIPTION OF THE INVENTION.

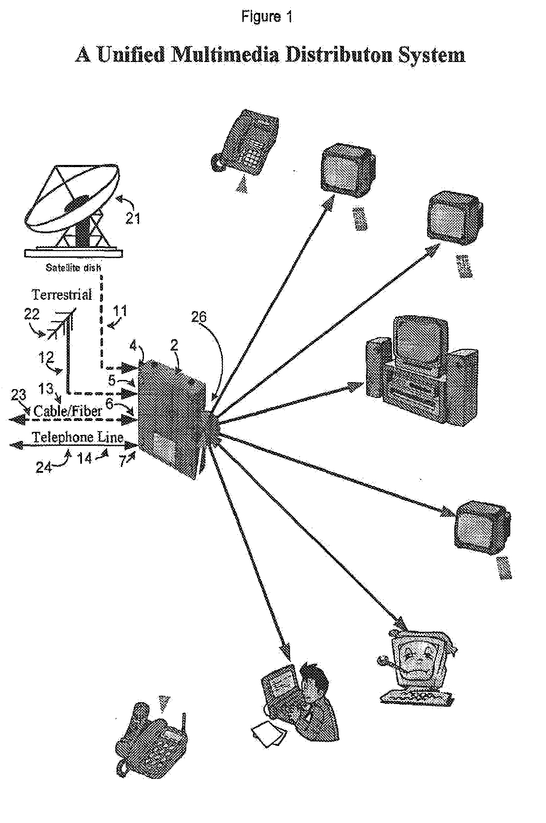

As in fig. 1, this invention relates to a wireless distribution system for home or business, comprising a unitary distribution box 2, called a wireless multimedia center (WMC), which has inputs for receiving signals 11-14 from one or more of:
a satellite dish 21;
a terrestrial antenna 22;
a cable input/output line 23; and/or
a telephone or data line 24 [ISDN, DSL, etc].

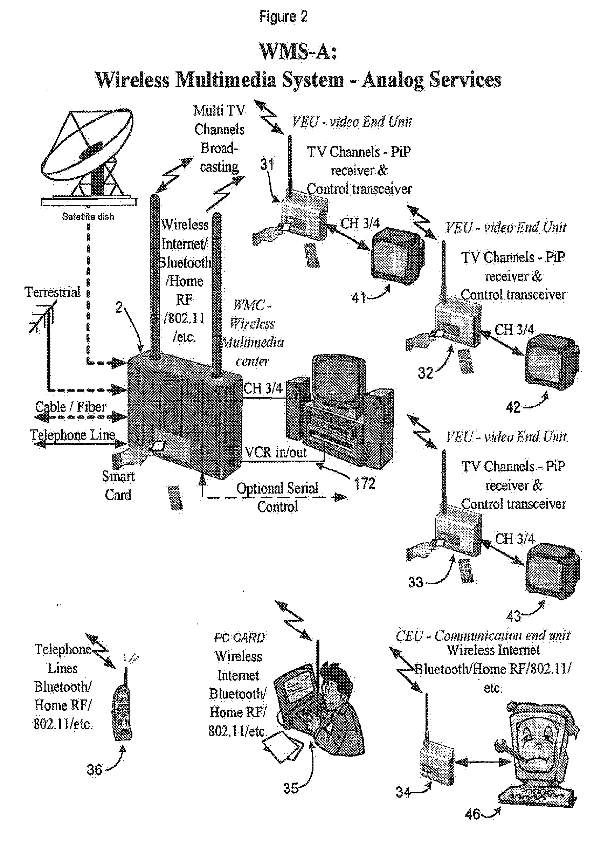

Signals input are then re-broadcast throughout the premises by low energy digital transmissions 26, at energy levels just above background radiation. As in fig. 2, these signals are transmitted to, and received by, individual transceivers 31-36 located throughout the premises. These transceivers are presently contemplated as:
video end unit 31-33, for
   television receivers 41-43;
   VCRs;
   AM/FM broadcasting;
Communications end unit 34-36, for;
   computers 46;
   telephones 36,
   faxes,
   answering machines,
   other telephonic devices, and
   any other electronic apparatus.

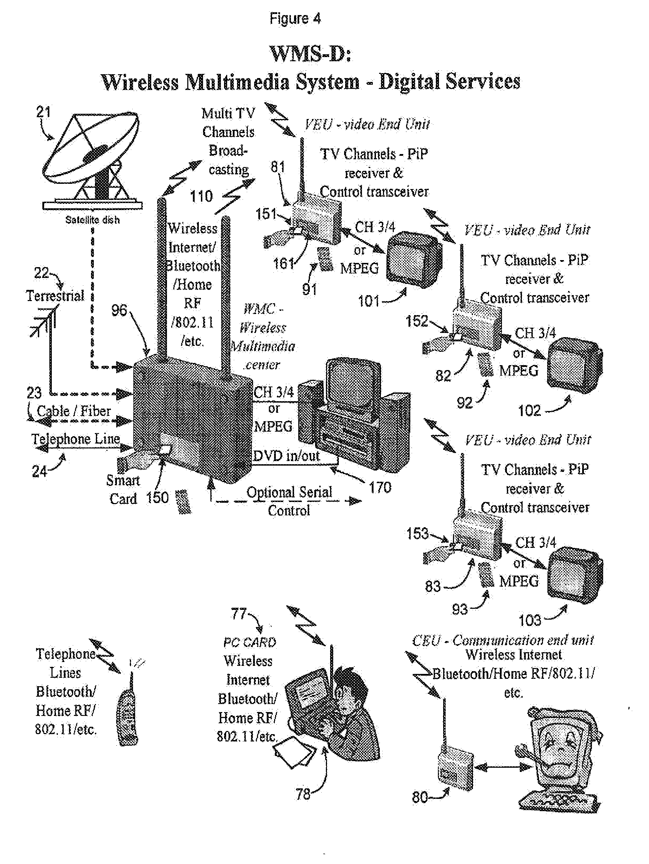

Fig. 4 shows a universal end unit 47, incorporating both Analog VEU 48 and digital VEU 49 and a CEU 50.

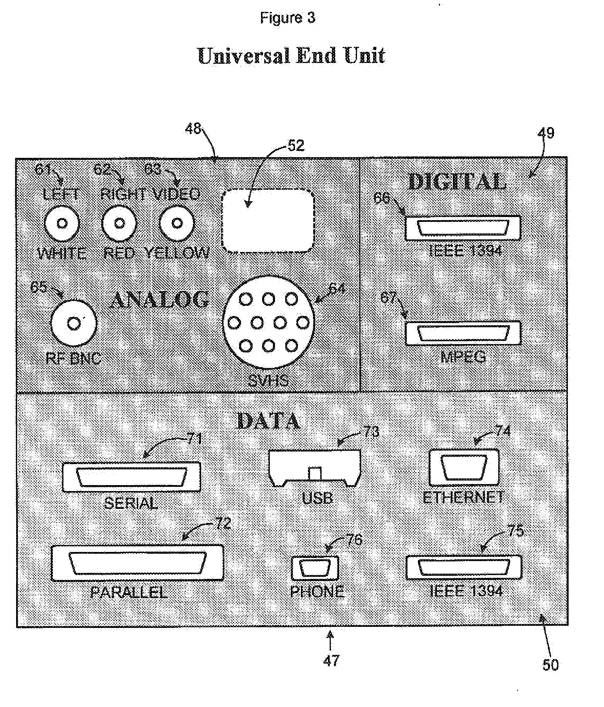

A VEU may be a set-top box 31-33 (fig. 2) or may be incorporated in a TV set instead of, or in addition to, a conventional tuner. As in fig. 3, an analog VEU 48 will incorporate a digital to analog converter 52 and analog connectors, such as RCA connectors 61-63, SVHS 64, or RF co-ax 65 on a set top box.

As in fig. 3, a digital VEU 49 can omit the digital to analog converter and will have digital connectors, on a set top box, such as IEEE 1394 66, and/or MPEG 67 connectors.

An EU can be universal, analog, digital or both, communications, or any combination.

The telephones may either: have wireless communications end units as adapters, or may be standard digital encrypted cordless phones, operating on standard digital cordless phone signals, whereby the wireless multimedia center (WMC) takes the place of various telephone base stations in transmitting the cordless telephone signals throughout the house.

Transceiving communications end units (CEU) may be separate boxes 50 with various ports such as: serial 71, parallel 72, USB 73, Ethernet 74, IEEE 1394 75 or telephone-and/or-fax-and/or-modem 76. Alternatively, as in fig. 4, a CEU PC card 77 may be inserted into a computer 78.

Transceiving end units 80 may be adapted to Internet communication terminals; lap-top computers; or personal information managers, such as the Palm Pilot™.

Where the transceiver is a video end unit 81-83, an associated remote control unit 91-93 selects programming that will be transmitted from the WMC 96, and displayed on the television or radio receiver 101-103 associated with that video end unit 91-93. Thus, where there were 3 TVs 101-103 in the house, there would be 3 video end units 91-93, one for each television receiver 101-103. Each video end unit 81 1 would have its own remote controller 91 capable of selecting channel sourcing from satellite dish 21, cable 23, roof antenna 22, or any other program source. The video end unit 81 would tell the WMC 96 what signal the VEU was instructed to receive, and the wireless multimedia center (WMC) 96 would select and tune in on that signal and direct a transmission 110 receivable by that video end unit 81. Each video end unit 81 can be instructed to receive two channels to provide picture-in-picture, or a single channel in which the WMC incorporates a first and a second program as a picture-in-picture. VEU's can receive other services such as custom individually tailored advertisements or billing messages, possibly as picture-in-picture.

Software for the system, including video, computer or programmable telephonic services can be maintained and upgraded remotely by the service provider.

Similar simultaneous services, such as simultaneous fax and telephone or individually tailored on-hold messages, can use the multichannel capability of each end unit: VEU or communications end unit.

The multiple video end units could be simultaneously receiving streaming digital data from the central control unit for as many different programs as the allocated channels allow. Each digital channel in the present scheme allows up to 10 simultaneous programs to be transmitted to 10 different end units in the available bandwidth. This limit often is a matter of present convenience and may vary in future embodiments.

As in Fig. 2, where the television receivers 41-43 are standard analog television sets, the Analog System would include a digital-to-analog converter 52 (fig. 3) to convert the digital transmissions throughout the house (fig. 2) to an analog signal interpretable by the receiver 41-43.

In fig. 4, as digital television becomes more common, the digital-to-analog converter part of the system can be dispensed with, and all the television data can be transmitted over the network in a digital fashion. Fig. 2, entitled WMS-A shows the system adapted to analog television receivers, while Fig. 4, WMS-D shows the system adapted to digital television systems.

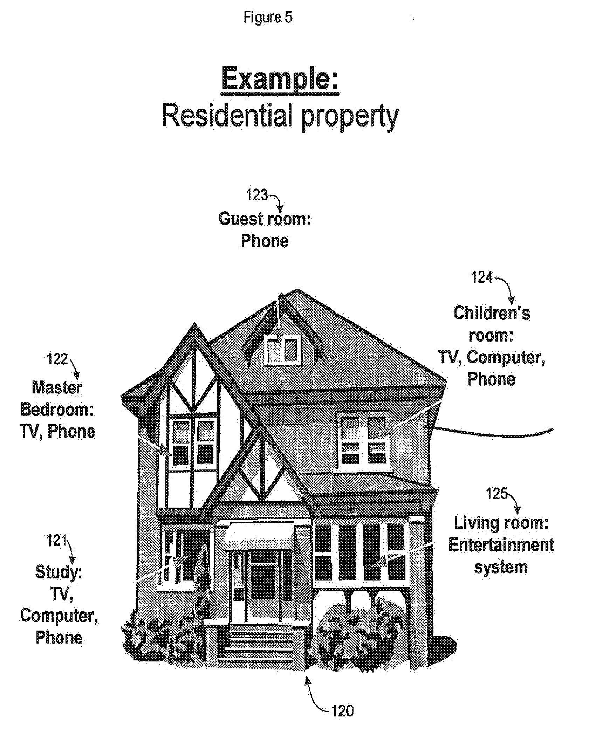

In fig. 5, Example: Residential Property, the services distributed throughout a house 120 are indicated. In this residential property example, a single WMC distributes the services shown to end units located as indicated 121-125 in the various rooms.

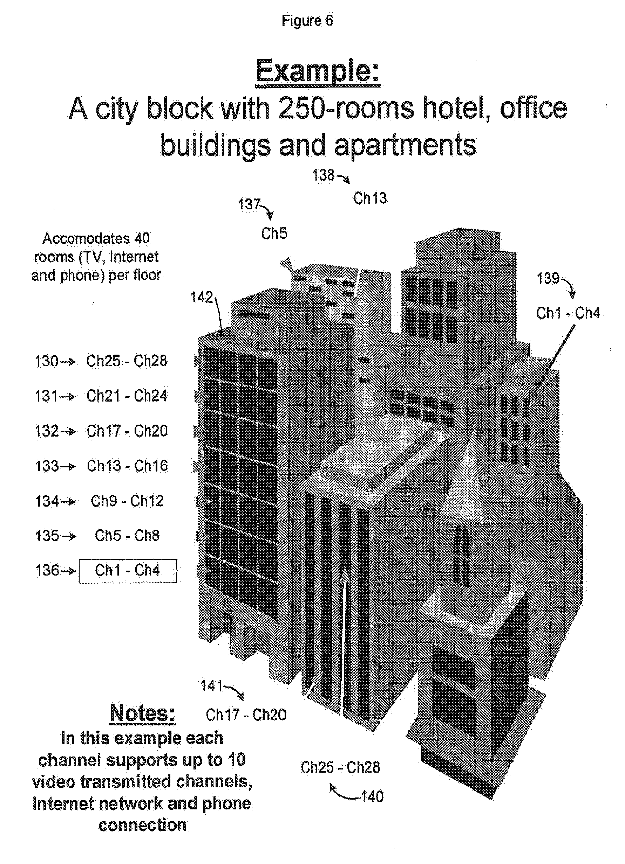

In fig. 6, Example: a City Block..., channel allocation and distribution on a given city block, using different channels 130-136 to avoid cross-talk in the different user's services, in a tight geographical area, is shown. There is some attempt to separate the channels, (such as 136 vs. 139; 130 vs, 140; 132 vs. 141) by distance to avoid cross-talk, but such separation is not necessary; it only serves as an added degree of insurance, because each signal will be digitally encoded and will be incapable of being read by another digital receiver, not programmed to receive the intended signal. In a spread out system such as this, additional WMC's or special repeaters 142 may be used to reach the most distant parts of the system.

Power transmission levels are automatically chosen to minimize additional radiation to the inhabitants and to minimize interference with users of similar systems in near locations, while guaranteeing the needed quality of service. The power level minimization also combines with the aforementioned digital encoding to minimize the risk of cross-talk and interference between multiple systems in tight geographic areas.

In general a video protocol received by the WMC will be the video output by the VEU, but the system can also be a protocol converter.

Some of the features which are contemplated by the present system are:
It will be capable of carrying all analog video protocols by being electronically transparent to such protocols.
It will provide picture-in-picture service for every video end unit.
It will distribute cable, satellite, terrestrial feeds, fiber-optic or any other feed, throughout its system.
It will interface to cable/digital subscriber line or POTS modems, either internal to the computer or external to the computer.
It will provide a data feed to all end unit computers in the system area via a wideband data pipe (WDP)and thereby create a network.
It may be adapted to any data protocol such as bluetooth, home RF, 802.11, or proprietary protocol, via soft-RF. Soft RF is essentially a software conveyor that can accommodate any protocol plug-in.
As in fig. 4, It will be smart card 150-154 controlled, so that a subscriber to a service can take his smart card 151, insert it into a local reader 161, which will identify him as being at a local system, and enable him to use his paid-for services on that system, regardless of what services the local system owner has paid to subscribe to.
Since there are no moving parts, the system will be nearly maintenance free. Software type maintenance may be remotely effected by the provider.
The system will allow a central connection for DVD 170, pre-paid programming, video camera,
VCR 172 (fig 2), or time shifting apparatus such as a video hard drive, transmitted to one or more of the VEU's 31-33 or 81-83 in fig. 4.

The digital system of fig. 4 contemplates similar features with the difference that it will be able to read all digital video standards.

One of the benefits of this system will be to create a family of wireless distribution systems. The system is a two-way communication system between the providers and the users. The providers will be able to monitor the use of given copyrighted intellectual property, such as computer programs or movies, and charge royalties for the use of such intellectual property automatically, on-line, and in a way that cannot be scammed easily. The proper royalties on copyrights and on patents can be easily monitored centrally in this system, and accounted for in a trustworthy automatic way. The system could obsolete the Neilsen TV rating system.

Various chip sets and chips can be provided for the central unit, and for the video end units, to allow integration with existing television sets or for other applications requiring data transmission within the structure or area, for applications that may not even yet be contemplated. The system is modular in the use of such chips, and in the easy addition of end units.

It can operate in the unlicensed frequency bands of 5.0-5.8 gigahertz and 2.4 - 2.5 gigahertz or in any other appropriate frequencies that are made available by the electromagnetic spectrum licensing authorities in the various countries.

Television data can use MPEG-1 and MPEG-2 compression, and/or AC3, transmission and multiplexing standards.

As described above, the system makes use of existing standards. However the system also contemplates novel transmission schemes as described below.

A proprietary modulation engine will accommodate the indoor environment.

The Inventors have come up with a proprietary design for simultaneous transmission of the video/audio, wideband data and communications.

The system enables the interception and distribution of multiple services such as telephone, radio, television, digital data, and Internet in a single control box and the distribution of those services throughout the location by wireless digital transmission, to end nodes, that are either specialized or multipurpose, throughout the site.

The typical home unit is contemplated as having distribution capability for at least three televisions, but the invention contemplates modular add-ons that will increase this capability as needed. As for example in fig. 6.

The system contemplates an ability to adapt to new services not known at this time.

The service contemplates a business model in which services may be charged per user, rather than per location. This would be implemented by the provision of a smart card 150-153 (fig. 4) for each user, whereby the user could access his accustomed blend of services whenever he is in a location using the system, regardless of what services are subscribed to by the local user.

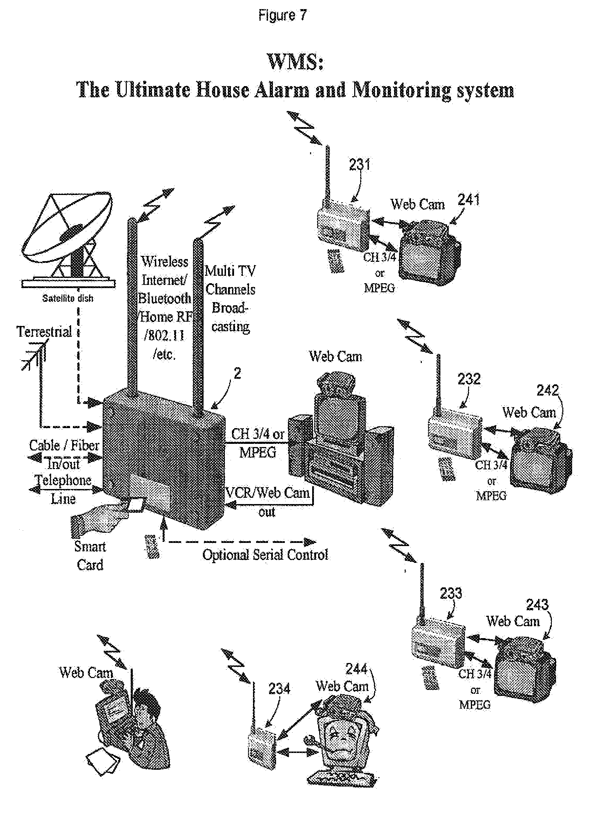

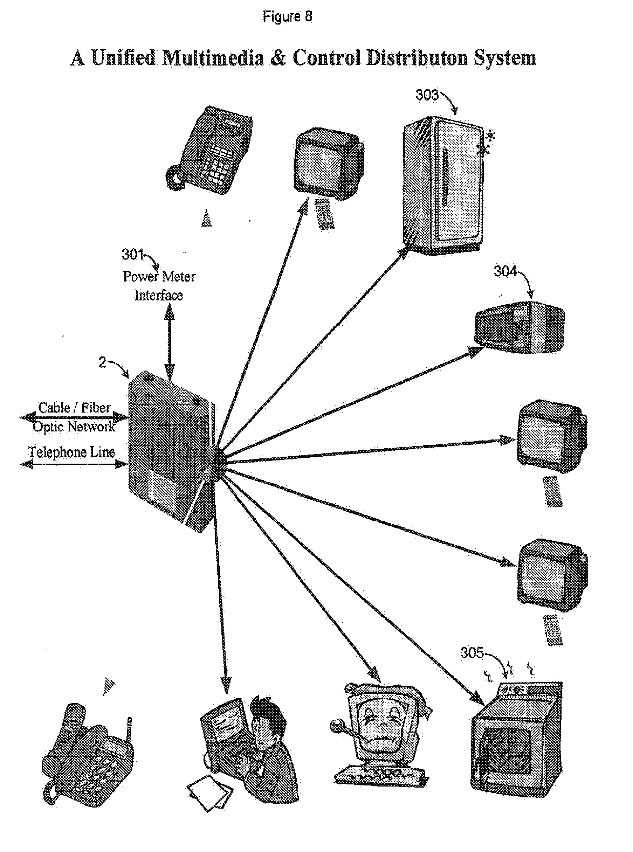

The system can be an alarm (fig. 7) or monitoring system (Fig. 7-8). Software can allow the EU's 231-234 to monitor sensors such as sound, video 241-244, sump level, motion 241-244, electrical consumption 301 (fug. 8), gas use, water use, and temperature.

The EU's can also be capable of controlling heating, ventilation, AC and home appliances 303-305.

The smart card can allow a subscriber to control and monitor his home remotely wherever he has access to a compatible system, or over modem or Internet connection.

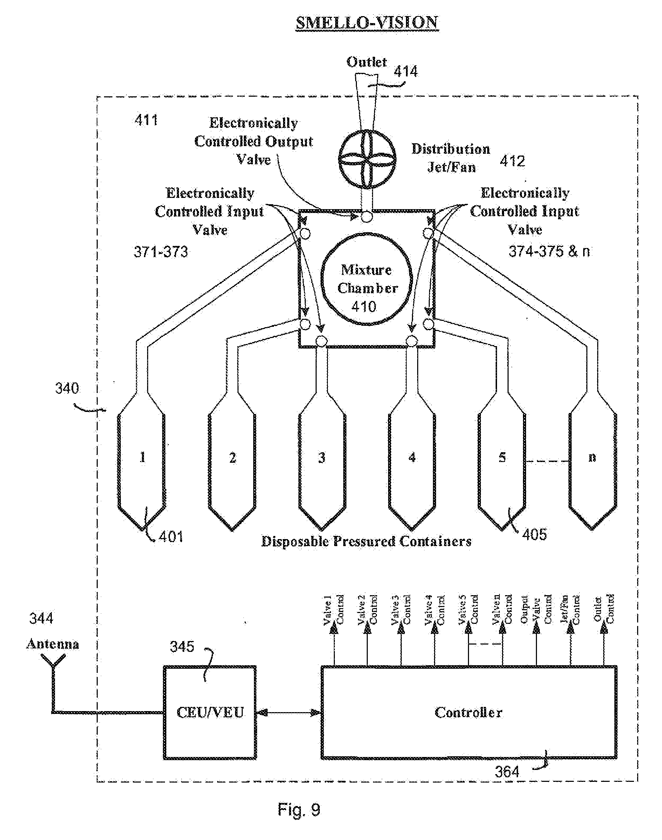

Fig. 9 shows an odor producing apparatus 340, designed to transmit odor, in conjunction with other media, such as movies, or independently, On the proper cue from a media transmission, a signal is received by antenna 344, for CEU/VEU 345, which causes controller 364 to selected electronically controlled input valves, such as 371-375 or n additional valves, to release odors from pressurized containers, such as 401-405 through n. The odors are mixed in the mixture chamber 410, released by output valve 411, and distributed by the fan 412 through outlet 414.

The present invention will now be described by way of reference to the following clauses.
1. A customer premises system including
   a wireless multimedia center (WMC) for reception on said premises from one or more signal sources and for distribution of segments of signals from signal sources through the wireless multimedia center to a plurality of end units, in which:
   the signals include video or audio signals and broadband data;
   the wireless multimedia center receives all the signals and distributes segments of said signals via a transmitter;
   the video signals are transmitted by orthogonal frequency division multiplexing (OFDM) in which all signals are added together and summed as an orthogonal array having dimensions of time, frequency and amplitude, to transmit spread spectrum multiplexed signals, in which each pulse including said signals has sufficiently long individual pulse widths to defeat multi-path, reflection and absorption phase induced losses;
   the video signals are distributed to one or more end units;
   the end units communicate with the wireless multimedia center, controlling which segments of which signals are distributed to each end unit.
2. A system according to clause 1 in which the broadband data is distributed to and received from one or more communication end units (CEU's).
3. A system according to clause 1 in which the system is modular.
4. A system according to clause 1 the end unit receiving video signals is a video end unit (VEU).
5. A system according to clause 4 in which the VEU is analog, has a digital-to-analog converter, and analog outputs including RF, RCA, and SVHS.
6. A system according to clause 4 in which the VEU is digital and has digital outputs including IEEE 1394 and MPEG.
7. A system according to clause 2 in which the CEU has one or more connections from a group including serial, phone, infrared, and Ethernet.
8. A system according to clause 4 in which the VEU is also a CEU and has one or more outputs from a group including serial, phone, Ethernet, IEEE 1394, MPEG, RF, RCA, and SVHS.
9. A system according to clause 1 in which the system has a separate bi-directional wideband data pipe (WDP) which provides, as demanded, control for the video channels, data transfer, or plain old telephone service.
10. A system according to clause 9 in which the separate by-directional wideband data pipe is encrypted.
11. A system according to clause 9 in which the separate bi-directional wideband data pipe is soft RF.
12. A system according to clause 4 having a remote control unit for each video end unit (VEU).
13. A system according to clause 4 in which the VEU is voice command controlled.
14. A system according to clause 4 in which the VEU is incorporated into a TV set.
15. A system according to clause 1 in which the WMC is incorporated into a TV set.
16. A system according to clause 1 in which the OFDM is a coded orthogonal frequency division multiple access (COFDMA).
17. A system according to clause 1 which is capable of a data transfer rate of 200 megabits/second or more.
18. A system according to clause 7 in which the wireless multimedia center (WMC) transmits and receives telephone service signals to the communications end unit, for use by telephones.
19. A system according to clause 7 in which the wireless multimedia center transmits broadband data signals to the communications end unit for use by data terminals, such as internet linked computers.
20. A system according to clause 1 in which the wireless multimedia center (WMC) transmits conventional coded digital cordless telephone signals to conventional cordless telephones.
21. A system according to clause 1 in which the wireless multimedia center or the end unit reads a user smart card for instruction as to a level of service authorized to said user, so that the user can utilize his authorized level of service on any premises in which he can place his smart card in the system.
22. A system according to clause 1 in which the wireless multimedia center communicates viewing information about use per TV set, to a service provider, for use in evaluating television viewing habits, as for example for obtaining television ratings in real time.
23. A system according to clause 1 in which the wireless multimedia center communicates viewing information from the premises for use in royalty distribution assessment.
24. A system according to clause 1 in which the viewing information is used by the provider to personalize advertising to the viewer in any media, for example phone messages or TV graphics.
25. A system according to clause 1 in which the wireless multimedia center distributes to a premises having over 200 sub-premises, each of which sub-premises receives individually selected programming and data and telephone service.
26. A system according to clause 1 in which the one of the dimensions of the transmission is direction.
27. A system according to clause 1 in which the one of the dimensions of the transmission is power.
28. A system according to clause 1 in which the one of the dimensions of the transmission is polarization.
29. A system according to clause 1 in which the system has a startup procedure including one or more steps from the following group:
   the wireless multimedia center seeks the end units by broadcasting instructions and listening to responses of the end unfits ;
   the wireless multimedia center registers said end units;
   the wireless multimedia center dynamically tests error rates to see which direction and polarization and power levels are best;
   the EU announces its presence and registers with the appropriate WMC.
30. A system according to clause 1 in which the OFDM transmits any analog video broadcast signal, such as NTSC, PAL and/or SECAM.
31. A system according to clause 1 in which the OFDM transmits any digital video signal, such as DVB, DV and/or ATSC.
32. A system according to clause 1 in which the system is an alarm or monitoring system.
33. A system according to clause 1 which is capable of controlling heating, ventilation, AC and home appliances.
34. A system according to clause 1 which is capable of monitoring for sound, video, sump level, motion and temperature.
35. A system according to clause 1 in which the data can be encrypted between service provider and WMC; encrypted to differentiate between VEUs; encrypted to prevent eavesdropping, and encrypted to minimize interference.
36. A system according to clause 1 in which
   the OFDM transmits broadcast odor signals to the VEU;
   data from a dynamic feedback odor sensor at the VEU is monitored by the system;
   the data channel transmits control signals to adjust a ventilation rate to clear old odors as video scenes change.
37. A system according to clause 4 in which the Video End Unit supports picture-in-picture.
38. A system according to clause 1 with multilevel WMC's or with repeaters, to distribute signals to a widely spaced premises.
39. A system according to clause 21 in which each smart card has it's own viewing rules, so, for example, a customer can exercise parental control over youthful holders of smart cards on the customer's account.
40. A system according to clause 1 in which the WMC is adapted to serve as a VEU for a local TV.
41. A system according to clause 1 in which the system supports services such as central DVD, Time shift programming, and the like.
42. A system according to clause 1 in which the system software can be updated, upgraded and maintained remotely by the service provider.
43. A customer premises system including
   a wireless multimedia center (WMC) for reception on said premises from one or more signal sources and for distribution of segments of signals from signal sources through the wireless multimedia center to a plurality of end units, in which:
   the signals include video signals and broadband data;
   the wireless multimedia center receives all the signals and distributes segments of said signals via a transmitter;
   the video signals are transmitted by orthogonal frequency division multiplexing (OFDM) in which all signals are added together and summed as an orthogonal array having dimensions of time, frequency and amplitude, to transmit spread spectrum multiplexed signals, in which each pulse including said signals has sufficiently long individual pulse widths to defeat multi-path, reflection and absorption phase induced losses;
   the video signals are distributed to one or more end units;
   the end units communicate with the wireless multimedia center, controlling which segments of which signals are distributed to each end unit;
   the broadband data is distributed to and received from one or more communication end units (CEU's);
   the end unit receiving video signals is a video end unit (VEU);
   the system has a separate bi-directional wideband data pipe which provides, as demanded, control for the video channels, data transfer, or plain old telephone service;
   all the transmissions are encrypted;
   the separate bi-directional wideband data channel is soft RF;
   a remote control unit controls each video end unit (VEU);
   the OFDM is a coded orthogonal frequency division multiple access (COFDMA);
   the system is capable of a data transfer rate of 200 megabits/second or more;
   the wireless multimedia center (WMC) transmits and receives telephone service signals to the communications end unit, for use by telephones;
   the wireless multimedia center transmits broadband data signals to the communications end unit for use by data terminals, such as network linked computers;
   the wireless multimedia center (WMC) transmits conventional coded digital cordless telephone signals to conventional cordless telephones;
   the wireless multimedia center or the end unit reads a user smart card for instruction as to a level of service authorized to said user, so that the user can utilize his authorized level of service on any premises in which he can place his smart card in the system;
   the wireless multimedia center communicates viewing information about use per TV set, to a service provider, for use in evaluating television viewing habits, as for example for obtaining television ratings in real time;
   the wireless multimedia center communicates viewing information from the premises for use in royalty distribution assessment;
   the viewing information is used by the provider to personalize advertising to the viewer in any media, for example phone messages or TV graphics;
   one of the dimensions of the Transmission is direction;
   one of the dimensions of the Transmission is power;
   one of the dimensions of the Transmission is polarization;
   the system has a startup procedure including one or more steps from the following group:
   the wireless multimedia center seeks the end units by broadcasting instructions and listening to responses of the end units;
   the wireless multimedia center registers said end units;
   the wireless multimedia center dynamically tests error rates to see which direction and polarization and power levels are best;
   the EU announces its presence and registers with the appropriate WMC. ;
   the OFDM transmits any analog video broadcast standard signal, such as NTSC, PAL and/or SECAM;
   the OFDM transmits any digital video standard signal, such as DVB, DV and/or ATSC;
   the system is an alarm and monitoring system which is capable of controlling heating, ventilation, AC and home appliances;
   which is capable of monitoring for sound, video, sump level, motion and temperature;
   in which the data can be encrypted between service provider and WMC; encrypted to differentiate between VEUs ; encrypted to prevent eavesdropping, and encrypted to minimize interference ;
   the Video End Unit supports picture-in-picture;
   in which each smart card has it's own viewing rules, so, for example, a customer can exercise parental control over youthful holders of smart cards on the customer's account;
   the WMC is adapted to serve as a VEU for a local TV;
   the system supports services such as central DVD, time shift programming, and the like;
   the system software can be updated and upgraded and maintained remotely by the service provider.

## Claims

1. A wireless multimedia device for use at a customer's premises comprising:
one or more receivers adapted to receive one or more wired or wireless selected multimedia signals selected from the group consisting of audio signals, video signals, and combinations thereof;
the wireless multimedia device being adapted to broadcast the selected multimedia signals from the wireless multimedia device at the customer's premises by orthogonal frequency division multiplexing (OFDM).

2. The wireless multimedia device of claim 1 comprising a wireless multimedia system adapted to broadcast one or more segments of the selected multimedia signals to one or more separate video end units (VEU's) at the customer's premises.

3. The wireless multimedia device of claim 2 wherein one or more of the VEU's are communication end units ("CEU's").

4. The wireless multimedia device of claim 1-2 or 3 being integrated into one or more consumer electronic devices.

5. The wireless multimedia device of claim 2-3 or 4 wherein the customer's premises comprises multiple sub-premises, a plurality of the sub-premises having one or more of the VEU's.

6. The wireless multimedia device of claim 1-4 or 5 comprising software adapted to be maintained remotely from the customer's premises.

7. The wireless multimedia device of claims 1-5 or 6:
the wireless multimedia device being adapted to communicate selected broadband data between the wireless multimedia device at the customer's premises and one or more end units at the customer's premises;
the wireless multimedia device being adapted to broadcast the one or more segments of the selected multimedia signals separately from other types of signals.

8. The wireless multimedia device of claim 7 comprising:
one or more first receivers adapted to receive one or more wired or wireless signals comprising broadband data;
one or more second receivers adapted to receive one or more wired or wireless selected multimedia signals selected from the group consisting of audio signals, video signals, and combinations thereof.

9. A method of using the wireless multimedia device of any of claims 1-7 or 8.

10. The method of claim 9, the wireless multimedia device communicating viewing information to a service provider.

11. The method of claim 9 or 10 wherein, when the customer's premises comprises a plurality of sub-premises, the wireless multimedia device simultaneously distributes one or more independently selected segments of the selected multimedia signals to multiple sub-premises.

12. The method of claim 9-10 or 11 comprising one or more startup procedures selected from the group consisting of:
the wireless multimedia device seeking one or more end units by broadcasting instructions and listening to responses of the one or more end units;
the one or more end units announcing their presence and registering with the wireless multimedia device;
the wireless multimedia device registering the one or more end units;
the wireless multimedia device dynamically testing error rates to select appropriate direction, polarization, and power levels for the registered one or more end units; and,
combinations thereof.

13. The method of claim 9-11 or 12 further comprising the service provider personalizing advertising transmitted to the end unit based on the viewing information.

14. The method of claim 9-12 or 13 further comprising receiving information provided by a user identifier to identify the user's authorized level of service.

15. The method of claim 9-13 or 14 further comprising encrypting the selected multimedia signals.
